# EUROPÄISCHE PATENTSCHRIFT

(11) **EP 1 567 787 B1**
(45) Veröffentlichungstag und Bekanntmachung des Hinweises auf die Patenterteilung: **23.04.2008**
(21) Anmeldenummer: 03812184.4
(22) Anmeldetag: 27.11.2003
(51) Int. Cl.: F16H 1/28, B62D 5/04

(54) **SCHWINGUNGS-UND GERÄUSCHARMES BERLAGERUNGSGETRIEBE FÜR EINE BELAGERUNGSLENKUNG**
QUIET, VIBRATION-FREE SUPERIMPOSED TRANSMISSION FOR A SUPERIMPOSED STEERING SYSTEM
BOITE DE SUPERPOSITION GENERANT PEU DE VIBRATIONS ET PEU DE BRUIT POUR DIRECTION A SUPERPOSITION

(30) Priorität: 29.11.2002 DE 10255718
(43) Veröffentlichungstag der Anmeldung: 31.08.2005
(73) Patentinhaber: Continental Teves AG & Co. oHG, 60488 Frankfurt am Main (DE); IMS Gear GmbH, 78166 Donaueschingen (DE)
(72) Erfinder: BAYER, Ronald, 63165 Mühlheim/Main (DE); JUNGBECKER, Johann, 55576 Badenheim (DE); LINKENBACH, Steffen, 65760 Eschborn (DE); NELL, Joachim, 63452 Hanau (DE); MUTH, Norman, 35066 Frankenberg (DE); SYNOVZIK, Wilfried, 78183 Hüfingen (DE); KÜMMEL, Markus, 78166 Donaueschingen (DE); MARGANDER, Andreas, 76726 Germersheim (DE)
(86) Internationale Anmeldenummer: PCT/EP2003/050904
(87) Internationale Veröffentlichungsnummer: WO 2004/051116

(56) Entgegenhaltungen:
- DE-A- 10 000 221
- DE-A- 10 036 937
- DE-A- 19 723 358

## Beschreibung

Die Erfindung betrifft Getriebe, vorzugsweise Überlagerungsgetriebe für eine Überlagerungslenkung, bei der ein vom Fahrer eingegebener Lenkwinkel bei Bedarf durch einen weiteren winkel überlagert werden kann, mit mindestens zwei Zahnrädern.

DE 100 36 937 offenbart ein spielfreies Planetenradgetriebe für eine Betätigungscinrichtung einer Fahrzeug-Lenkvorrichtung, nach dem Oberbegriff des Anspruchs 1.

Es ist die Aufgabe der Erfindung ein Getriebe zu schaffen, welches einen komfortablen Lauf mit einer im Automobilbau geforderten Ausfallsicherheit gewährleistet.

Die Aufgabe wird durch die Merkmale der unabhängigen Patentansprüche gelöst. Spezielle Ausgestaltungen der Erfindung sind in den abhängigen Unteransprüchen angegeben.

Durch die Erfindung wird die Anpassung an verschiedene Anforderungen für unterschiedliche Anwendungen, insbesondere ein geräuscharmer Betrieb bei gleichzeitiger relativ hoher mechanischer Belastbarkeit, realisierbar.

Im Sinne der Erfindung ist der Begriff "Getriebe" weit aufzufassen. Vorzugsweise aber sind darunter Rotations/Rotations-Cetriebe zu verstehen mit mindestens einer Stufe oder Getriebeanordnungen mit mindestens zwei Rotations/Rotations-Getrieben, die durch entsprechende Mittel wirkverbunden sind.

Dabei ist das Getriebe vorzugsweise ein Überlagerungsgetriebe für eine Überlagerungslenkung. Überlagerungslenkungen sind dadurch charakterisiert, dass dem vom Fahrer eingegebenen Lenkwinkel bei Bedarf ein weiterer Winkel durch einen Aktuator überlagert werden kann. Der zusätzliche Winkel wird durch einen Regler definiert und dient zur Erhöhung der Stabilität und Agilität des Fahrzeugs. Es besteht auch die Möglichkeit, Störgrößen zu kompensieren und den Gradienten Radlenkwinkel über Lenkradwinkel als Funktion der Fahrgeschwindigkeit des Fahrzeugs zu realisieren. Es werden hydraulische oder elektrische Aktuatoren verwendet. Durch die unterschiedlichen physikalischen Eigenschaften der Zahnräder kann das Getriebe gut an die Anforderungen eines Lenkungsgetriebes angepasst werden. Insbesondere kann ein geräuscharmer Betrieb erreicht werden.

In Ausgestaltung der Erfindung ist es vorgesehen, dass das zweite Zahnrad härter ist als das erste Zahnrad.

In Ausgestaltung der Erfindung ist es vorgesehen, dass das zweite Zahnrad formstabiler ist als das erste Zahnrad.

In Ausgestaltung der Erfindung ist es ebenso vorgesehen, dass das erste und zweite Zahnrad unterschiedliche Elastizitätsmodule (E-Module) aufweisen.

Erfindungsgemäß ist es vorgesehen, dass das erste und das zweite Zahnrad zumindest in einem Teilbereich aus einem unterschiedlichen Werkstoff bzw. einer unterschiedlichen Werkstoffkombination bestehen.

Das bedeutet das gesamte Zahnrad kann aus einem Werkstoff gefertigt werden oder aber zumindest die in formschlüssigen Kontakt kommenden Oberfläche weisen einen unterschiedlichen Werkstoff auf. Als elastisches Material können dauerflexible Kunststoffe eingesetzt werden. Dabei kann das erste Zahnrad auf zumindest einer Teiloberfläche mit einem elastischen Material bedeckt sein. Das Material kann beispielsweise durch Kleben, Aufspritzen, Aufvulkanisieren oder andere Oberflächenbeschichtungsverfahren aufgebracht werden. Der Kernbereich des ersten Zahnrads besteht dann vorzugsweise aus einem metallischen Werkstoff.

In Ausgestaltung der Erfindung ist es vorgesehen, dass als unterschiedliche Werkstoffe ein metallischer Werkstoff und ein Kunststoff eingesetzt werden.

In Ausgestaltung der Erfindung ist es vorgesehen, dass das erste und das zweite Zahnrad in axialer Richtung nebeneinander angeordnet sind.

In Ausgestaltung der Erfindung ist es ebenso vorgesehen, dass das erste Zahnrad durch eine positive Profilverschiebung radial von dem zweiten Zahnrad abgesetzt ist.

Dadurch kommt bei normaler Momentübertragung nur das erste Zahnrad mit einer zugehörigen Zahnung eines weiteren Getriebebauteils in Kontakt. Erst im Bereich einer elastischen Verformung des ersten Zahnrads kontaktiert das zweite Zahnrad die zugehörige Zahnung des weiteren Getriebebauteils.

In Ausgestaltung der Erfindung weist das Getriebe eine Geradverzahnung oder eine Schrägverzahnung auf. Eine Geradverzahnung ist aber besonders bevorzugt.

Das Getrieb ist ein Rotations/Rotations-Getriebe, vorzugsweise ein Planetengetriebe. Im Prinzip besteht das Planetengetriebe aus einem auf einer Welle sitzenden Sonnenrad im Mittelpunkt eines Planetensatzes, der Planetenräder aufweist, die mit dem Sonnenrad verzahnt sind und die sich um das zentrale Sonnenrad drehen. Die Planetenräder rotieren gleichzeitig um ihre eigene Achse. Möglich macht dies ein Planetenträger, der die einzelnen Planetenräder hält. Durch eine feste Anordnung der Räder bzw. Wellen und/oder Träger lassen sich verschiedene Antriebs- und Abtriebsmöglichkeiten für das Planetenradgetriebe realisieren. Durch das Planetengetriebe lässt sich vorteilhaft ein sehr kleiner Bauraum realisieren. Auch die Fertigung ist relativ preiswert. Denn es entstehen im Grunde keinen radialen.Kräfte, wodurch einfache Gleitlager ausreichen.

Das erste und das zweite Zahnrad sind Planetenräder in dem Planetengetriebe.

In Ausgestaltung der Erfindung ist es vorgesehen, dass das erste und das zweite Zahnrad eine radial weiche Aufhängung oder Lagerung aufweisen.

Vorzugsweise wird das Getriebe bei einer elektromechanische Überlagerungslenkung (ESAS) (2) für Kraftfahrzeuge eingesetzt. Andere Anwendungsbereiche mit ähnlichen Anforderungen sind denkbar.

Die Erfindung wird nun anhand eines Ausführungsbeispiels und durch Abbildungen (Fig.1 bis Fig.9) beispielhaft näher erläutert.

In der Fig.1 ist eine elektromechanische Überlagerungslenkung (ESAS) mit einem Überlagerungsgetriebe schematisch dargestellt.

In der Fig.2 ist ein Planetengetriebe in einer perspektivischen Darstellung gezeigt, das als Überlagerungsgetriebe für die Fahrzeuglenkung eingesetzt wird.

In der Fig.3 ist das in Fig.2 dargestellte Planetengetriebe in einem Querschnitt schematisch gezeigt.

In der Fig.4 ist das in Fig.2 dargestellte Planetengetriebe in einem Querschnitt gezeigt.

In der Fig.5 ist ein Ausschnitt im Bereich der Planetenräder aus dem in Fig.2 dargestellten Planetengetriebe in vergrößerter Darstellung gezeigt.

In der Fig.6 sind die Planetenräder und das Sonnenrad aus dem in Fig.2 dargestellten Planetengetriebe gezeigt.

In der Fig.7 sind die Planetenräder aus dem in Fig.2 dargestellten Planetengetriebe gezeigt.

In der Fig.8 ist ein Ausschnitt aus einer erster Ausführungsform eines Planetenrads in einem Querschnitt näher dargestellt.

In der Fig.9 ist ein Ausschnitt aus einer zweiten Ausführungsform eines Planetenrads in einem Querschnitt näher dargestellt.

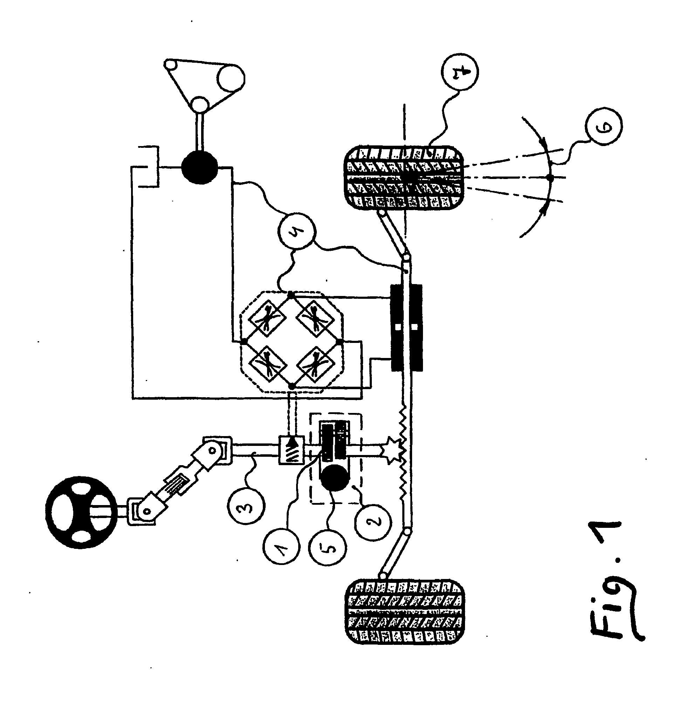

Ein Anwendungsfall bei einer elektromechanische Überlagerungslenkung zeigt Fig.1. Hierbei wird das Getriebe (1) in die geteilte Lenksäule (3) eines konventionellen Lenkungssystem (4) integriert. Durch den Eingriff eines angeordneten E-Motors (5) kann durch das Getriebe (1) ein zusätzlicher oder reduzierter Lenkwinkel (6) an den Vorderräder (7) erzeugt werden (variable Zenkübersetzung). Durch die variable Lenkübersetzung kann entsprechend der Fahrsituation das Lenkverhalten direkter (agiler) oder indirekter gestaltet werden. Ebenso können fahrdynamische Lenkungseingriffe realisiert werden.

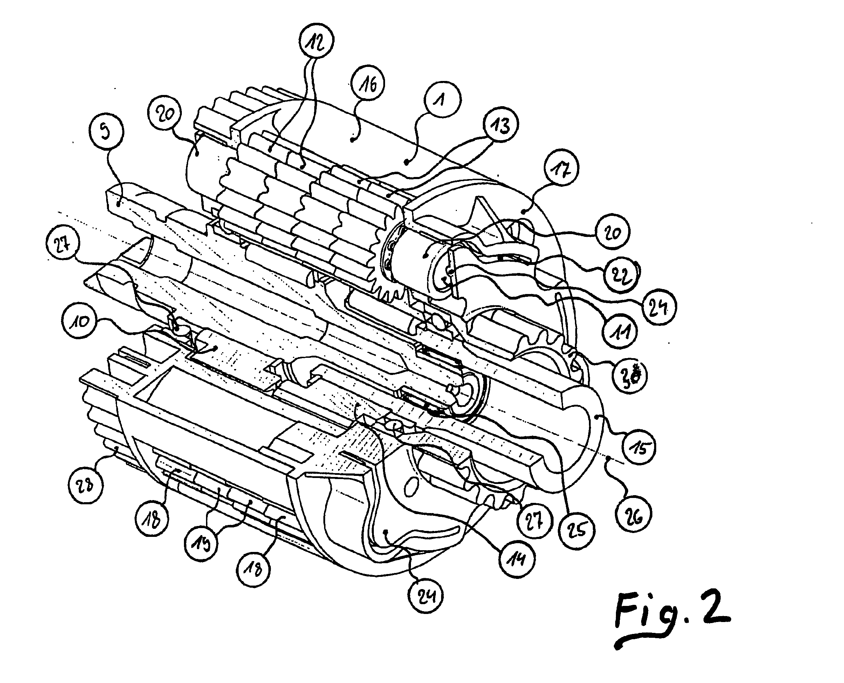

Das in der Fig.2 näher gezeigte Überlagerungsgetriebe ist ein Planetengetriebe mit einem Verstellmittel zur Einstellung des Überlagerungswinkels.

Das Getriebe (1) besteht im wesentlichen aus einer Getriebeeingangswelle (9), Sonnenrad 1 (10), Planetenträger (11), Planetenräder (12/13), Sonnenrad 2 (14), Getriebeausgangswelle (15), Getriebegehäuse 1 (16) und Getriebegehäuse 2 (17).

Hierbei können vorzugsweise die Sonnenräder (10/14) und die Getriebewellen (9/15) einteilig gestaltet werden.

Ein geräuscharmer Lauf des Getriebes wird nach der Erfindung durch die Teilung der Sonnenräder (12/13) in einen Kunststoffteil (18) und in einen Metallteil (19) realisiert.

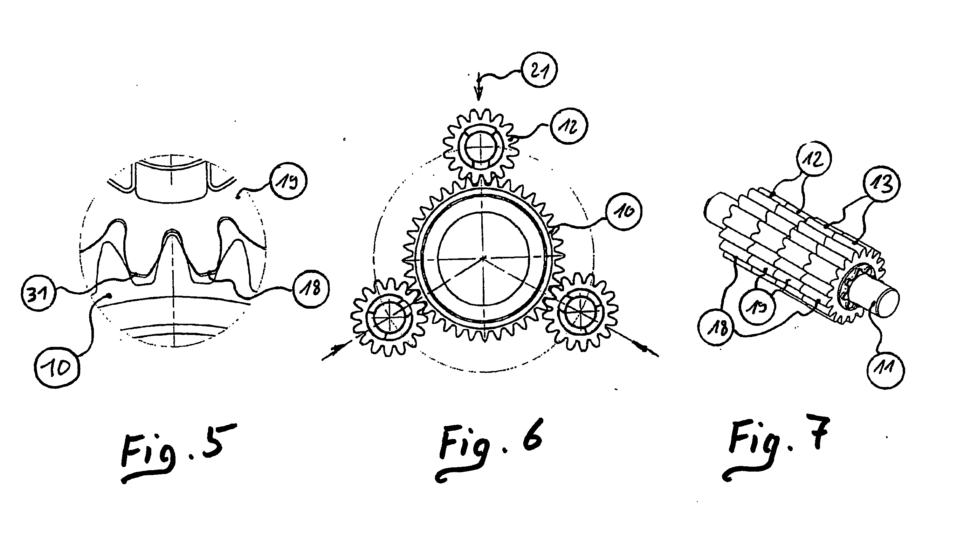

Der Kunststoffteil (18) und der Metallteil (19) der jeweiligen Planetenräder (12/13) sind bezüglich der Zähnezahl gleich, der Kunststoffteil (18) ist hingegen durch eine positive Profilverschiebung (siehe Fig.5) radial von dem Metallteil (19) abgesetzt. Hierdurch kommt nur der Kunststoffteil (18) mit den zugehörigen Sonnenrädern (10/14) in Kontakt. Der Metallteil (19) dient nur für die Momentenübertragung außerhalb der nominellen Lenkmomentenbereiches und als Überlastsicherung bei einem Missbrauchsmoment. Hierbei verformt sich der Kunststoffteil (18) im elastischen Bereich und der zugehörige Metallteil (19) kontaktiert die Sonnenräder (10/14). Die beiden Planetenräder (12/13) sowie der Metallteil (19) sind form-und kraftschlüssig miteinander verbunden.

Der über die gesamte Betriebsdauer spielfreie Lauf des Getriebes (1) wird durch eine auf die Planetenträgerlagerung (20) und den Planetenträger (11) radiale definierte Andrückkraft Fr (siehe Fig.6) gewährleistet. Diese Radialkraft wird vorzugsweise über ein in die Getriebegehäuse (16/17) integriertes Federelement (22) erzeugt.

Durch die Geradverzahnung des Getriebes (1) entstehen keine Axialkräfte und können mittels eines in die Getriebegehäuse (16/17) integrierten Druckstückes (24) spielfrei in ihrer Position gehalten werden.

Ein in die beiden Getriebewellen (9/15) integriertes Loslager (25) stabilisiert die Mittelachse (26) zueinander. Die beiden Festlager (27) sind in den Getriebegehäusen (16/17) fest integriert und fixiert axial die Sonneräder (10/14).

Vorzugsweise wird die Verzahnung (Zahnriemen oder Stirnrad) (28) des Antriebes (29) direkt am Getriebegehäuse (16) integriert.

Die in das Getriebegehäuse (14) angebrachte Kupplungsgeometrie (30) ermöglicht das Anbringen einer Verriegelungseinheit, welche stromlos im Fehlerfall die Getriebegehäuse (10/14) rotatorisch blockiert und einen überlagerten Lenkungseingriff verhindert.

Eine einfache axiale Montage des Getriebes (1) ist durch die Geradverzahnung und das geteilte Getriebegehäuse gegeben.

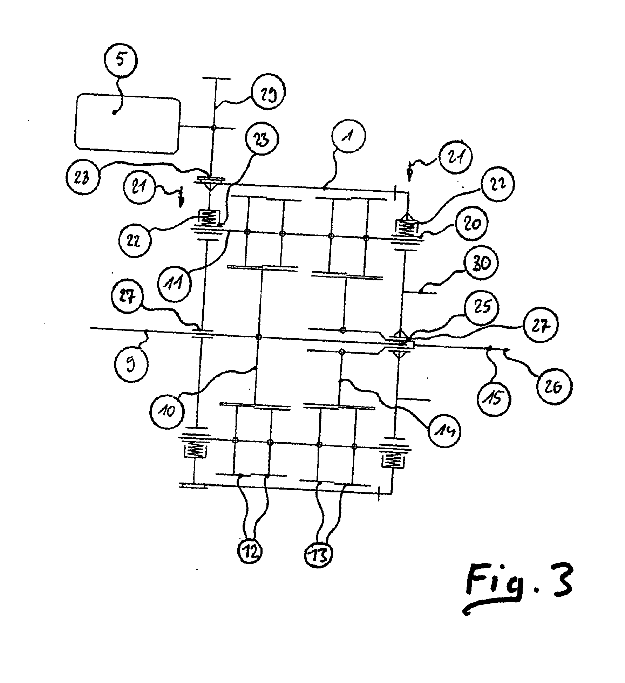

In der Fig.3 ist das in Fig.2 dargestellte Planetengetriebe in einem Querschnitt schematisch gezeigt. Daher sind dieselben Elemente auch mit denselben Bezugszeichen versehen. In der Fig.3 ist darüber hinaus ein Überlagerungs-Verstellmotor 5 dargestellt, der über ein Zahnrad 29 und über eine Zahnung 28 das Getriebe 1 bzw. das Gehäuse des Getriebes antreibt.

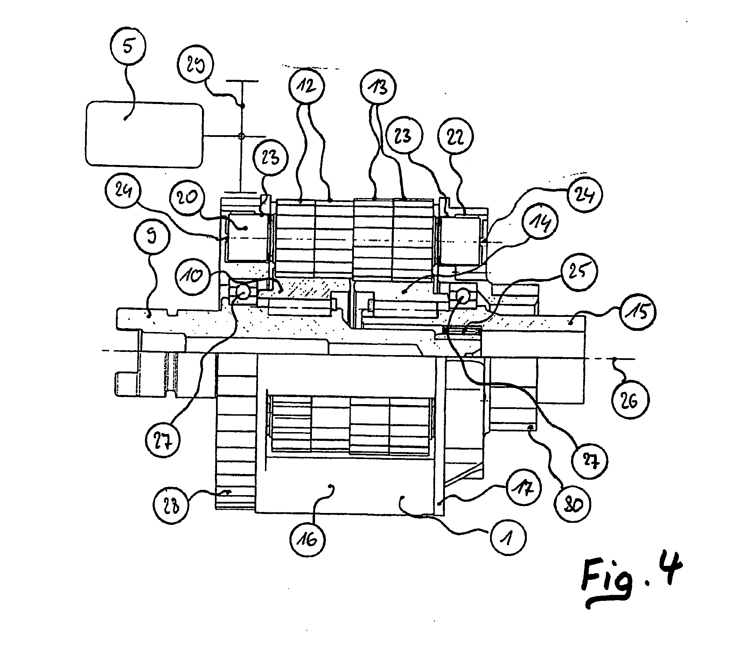

In der Fig.4 ist das in Fig.2 dargestellte Planetengetriebe in Schnitt längs der Drehachse des Getriebes gezeigt. Daher sind dieselben Elemente auch mit denselben Bezugszeichen versehen.

In der Fig.5 ist ein Ausschnitt im Bereich der Planetenräder aus dem in Fig.2 dargestellten Planetengetriebe in vergrößerter Darstellung gezeigt. Daher sind dieselben Elemente auch mit denselben Bezugszeichen versehen. Es sind Ausschnitte aus dem Kunststoffteil (18) und dem Metallteil (19) der jeweiligen Planetenräder (12/13) zu erkennen. Der Kunststoffteil (18) ist durch eine positive Profilverschiebung (31) radial von dem Metallteil (19) abgesetzt. Hierdurch kommt nur der Kunststoffteil (18) mit den zugehörigen Sonnenrädern (10/14) in Kontakt.

In der Fig.6 sind die Planetenräder und das Sonnenrad aus dem in Fig.2 dargestellten Planetengetriebe gezeigt. Daher sind dieselben Elemente auch mit denselben Bezugszeichen versehen. In diesem Ausschnitt ist dargestellt, wie der spielfreie Lauf des Getriebes (1) durch eine auf die Planetenträgerlagerung (20) und den Planetenträger (11) radiale definierte Andrückkraft Fr (21) gewährleistet wird. Die Radialkraft (21) ist so definiert, dass in dem nominellen Lenkmomentenbereich der Kunststoffteil (18) der beiden Planetenräder (12/13) spielfrei mit den beiden Sonnenrädern (10/14) kämmen. Durch die radial weiche Aufhängung der Planetenräder (12/13) ergibt sich ein ruckfreier und komfortabler Lauf des Getriebes (1).

In der Fig.7 sind die Planetenräder aus dem in Fig.2 dargestellten Planetengetriebe gezeigt. Daher sind dieselben Elemente auch mit denselben Bezugszeichen versehen. Hier ist Teilung der Sonnenräder (12/13) in einen Kunststoffteil (18) und in einen Metallteil (19) näher zu erkennen, wobei die Planetenräder (12/13) sowie der Metallteil (19) form- und kraftschlüssig miteinander verbunden sind.

Durch die Aufteilung der Planetenräder in einen Kunststoff-und einen Metallteil und die entsprechende Profilverschiebung werden im wesentlichen vorteilhaft ein geräuscharmer Lauf des Planetenradgetriebes bei einem Lenkungseingriff (Komfort), ein gewohntes Lenkverhalten bei nicht aktiver Überlagerungslenkung (Übersetzungsverhältnis des Getriebes ca.1:1, ein spielfreier Lauf des Planetenradgetriebes bei einem Lenkungseingriff (Komfort) und eine hohe Überlastsicherheit außerhalb der nominellen Lenkmomentenbereiches (Missbrauchsmoment) erzielt. Der erzielten Komfort-Gewinn wird des.weiteren dadurch erhöht, dass die Planeten radial abgestützt in einem Federpaket aufgehängt sind.

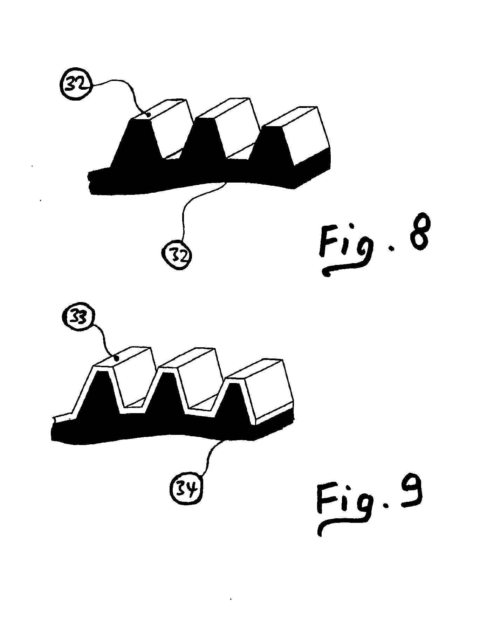

In der Fig.8 ist ein Ausschnitt aus einer erster Ausführungsform eines Zahnrads in einem Querschnitt näher dargestellt. Hier besteht das Zahnrad aus einem einzigen Material 32, beispielsweise einem Kunststoff für ein erstes Zahnrad oder einem metallischen Werkstoff eines zweiten Zahnrads des Getriebes.

In der Fig.9 ist ein Ausschnitt aus einer zweiten Ausführungsform eines Zahnrads in einem Querschnitt näher dargestellt, wobei hier die Oberfläche des Zahnrads eine Beschichtung 33 aus einem elastischen Material aufweist und der Kern 34 aus einem metallischen Werkstoff besteht.

## Patentansprüche

1. Getriebe, vorzugsweise Überlagerungsgetriebe für eine Überlagerungslenkung bei der ein vom Fahrer eingegebener Lenkwinkel bei Bedarf durch einen weiteren Winkel überlagert werden kann, mit mindestens zwei Zahnrädern, die mit einem weiteren Zahnrad in Kontakt sind,
**dadurch gekennzeichnet,**
**dass** mindestens ein erstes Zahnrad im Getriebe vorgesehen ist, das im Hinblick auf Geräuscharmut ausgelegt ist und die Kraftübertragung im Getriebefunktions-Normalfall übernimmt, und dass mindestens ein zweites Zahnrad im Getriebe vorgesehen ist, das im Hinblick auf die Kraftübertragung im Getriebefunktions-Überlastfall ausgelegt ist, und das erste und das zweite Zahnrad auf einer gleichen Welle angeordnet sind und die Zahnräder zumindest an in formschlüssigen Kontakt kommenden Oberflächen zumindest in einem Teilbereich einen unterschiedlichen Werkstoff bzw. eine unterschiedliche Werkstoffkombination aufweisen.

2. Getriebe nach Anspruch 1,
**dadurch gekennzeichnet,**
**dass** das erste Zahnrad im Hinblick auf Schwingungsarmut und/oder geringes Spiel ausgelegt ist.

3. Getriebe nach Anspruch 1 oder 2,
**dadurch gekennzeichnet, dass** der Getriebefunktions-Überlastfall ab einem bestimmten Moment-Grenzwert vorliegt, den das Getriebe in einer normalen Betriebsweise nicht übersteigt.

4. Getriebe nach einem der Ansprüche 1 bis 3,
**dadurch gekennzeichnet, dass** das zweite Zahnrad nach einer definierten elastischen Verformung des ersten Zahnrads zum Eingriff kommt.

5. Getriebe nach einem der Ansprüche 1 bis 4, vorzugsweise Überlagerungsgetriebe für eine Überlagerungslenkung, bei der ein vom Fahrer eingegebener Lenkwinkel bei Bedarf durch einen weiteren Winkel überlagert werden kann, mit mindestens zwei Zahnrädern,
**dadurch gekennzeichnet, dass** mindestens ein erstes Zahnrad und ein zweites Zahnrad im Getriebe vorgesehen ist, wobei das erste und zweite Zahnrad unterschiedliche physikalische Eigenschaften aufweisen.

6. Getriebe nach einem der Ansprüche 1 bis 5,
**dadurch gekennzeichnet, dass** das zweite Zahnrad härter ist als das erste Zahnrad.

7. Getriebe nach einem der Ansprüche 1 bis 6,
**dadurch gekennzeichnet, dass** das zweite Zahnrad formstabiler ist als das erste Zahnrad.

8. Getriebe nach einem der Ansprüche 1 bis 7,
**dadurch gekennzeichnet, dass** das erste und zweite Zahnrad unterschiedliche Elastizitätsmodule (E-Module) aufweisen.

9. Getriebe nach einem der Ansprüche 1 bis 8,
**dadurch gekennzeichnet, dass** als unterschiedliche Werkstoffe ein metallischer Werkstoff und ein Kunststoff eingesetzt werden.

10. Getriebe nach einem der Ansprüche 1 bis 9,
**dadurch gekennzeichnet, dass** das erste Zahnrad durch eine positive Profilverschiebung radial von dem zweiten Zahnrad abgesetzt ist.

11. Getriebe nach einem der Ansprüche 1 bis 10,
**dadurch gekennzeichnet, dass** das Getriebe eine Geradverzahnung aufweist.

12. Getriebe nach einem der Ansprüche 1 bis 11,
**dadurch gekennzeichnet, dass** das Getriebe ein Planetengetriebe ist.

13. Getriebe nach Anspruch 12,
**dadurch gekennzeichnet, dass** das erste und das zweite Zahnrad Planetenräder in dem Planetengetriebe sind.

14. Getriebe nach Anspruch 13,
**dadurch gekennzeichnet, dass** das erste und das zweite Planetenrad eine radial weiche Aufhängung oder Lagerung aufweisen.

## Claims

1. A transmission, preferably a superposition transmission for an overriding steering system, wherein a steering angle set by the driver can be superimposed by an additional angle in case of need, with at least two toothed gears being in contact with an additional toothed gear,
**characterized in that** at least one first toothed gear is provided in the transmission, which is designed in terms of a low noise level and assumes the transmission of force in the case of normal transmission function, and **in that** at least one second toothed gear is provided in the transmission which is designed in terms of the transmission of force in the event of an overload of the transmission function, and the first and the second toothed gears are arranged on the same shaft and the toothed gears having a different material or a different combination of materials at least on surfaces that come into a form-locking contact at least in a partial area.

2. Transmission as claimed in claim 1,
**characterized in that** the first toothed gear is designed in terms of low vibration level and/or small play.

3. Transmission as claimed in claim 1 or 2,
**characterized in that** the event of a transmission function overload prevails starting from a determined moment limit value which the transmission does not exceed during normal operation.

4. Transmission as claimed in any one of claims 1 to 3,
**characterized in that** the second toothed gear comes into engagement after a defined elastic deformation of the first toothed gear.

5. Transmission as claimed in any one of claims 1 to 4, preferably a superposition transmission for an overriding steering system, wherein a steering angle set by the driver can be superimposed by an additional angle in case of need, with at least two toothed gears,
**characterized in that** at least one first toothed gear and a second toothed gear are provided in the transmission, with the first and the second toothed gears having difference physical characteristics.

6. Transmission as claimed in any one of claims 1 to 5,
**characterized in that** the second toothed gear is harder than the first toothed gear.

7. Transmission as claimed in any one of claims 1 to 6,
**characterized in that** the second toothed gear is mode stable in its shape than the first toothed gear.

8. Transmission as claimed in any one of claims 1 to 7,
**characterized in that** the first and second toothed gears have different modules of elasticity (E-modules).

9. Transmission as claimed in any one of claims 1 to 8,
**characterized in that** a metallic material and a plastic material are used as different materials.

10. Transmission as claimed in any one of claims 1 to 9,
**characterized in that** the first toothed gear is offset radially from the second toothed gear by a positive profile displacement.

11. Transmission as claimed in any one of claims 1 to 10,
**characterized in that** the transmission has a straight gearing.

12. Transmission as claimed in any one of claims 1 to 11,
**characterized in that** the transmission is a planetary gear.

13. Transmission as claimed in claim 12,
**characterized in that** the first and the second toothed gears are planetary wheels in the planetary gear.

14. Transmission as claimed in claim 13,
**characterized in that** the first and the second planetary wheels have a radially non-rigid suspension or mounting support.

## Revendications

1. Mécanisme de transmission, particulièrement de transmission à superposition pour une direction superposée où un angle directeur enregistré par le conducteur, au besoin, peut être superposé par un autre angle, comportant au moins deux roues à denture en contact avec une autre roue à denture,
**caractérisé en ce qu'**au moins une première roue à denture est pourvue dans le mécanisme de transmission construit en considération d'un niveau de bruit bas et transmettant la force en cas normal de la fonction de transmission, et qu'au moins une roue à denture secondaires est pourvue dans le mécanisme de transmission construit en considération de la transmission de force en cas de surcharge de la fonction de transmission, et que les roues première et secondaire sont disposées sur un arbre identique, les roues au moins aux surfaces en contact de manière commandé en mécanique au moins dans une section partielle étant formées de matière différente ou d'une combinaison de matière différente.

2. Mécanisme de transmission selon la revendication 1,
**caractérisé en ce que** la première roue à denture est construite en considération d'un niveau de vibration et/ou de jeu bas.

3. Mécanisme de transmission selon les revendications 1 ou 2,
**caractérisé en ce que** le cas de surcharge de la fonction de transmission se présente à partir d'une couple valeur limite prédéterminée non dépassée par les engrenages dans une mode d'opération normale.

4. Mécanisme de transmission selon les revendications 1 à 3,
**caractérisé en ce que** la roue à denture secondaire après une déformation élastique définie de la roue à denture première s'engrènera.

5. Mécanisme de transmission selon l'une des revendications 1 à 4, particulièrement de transmission superposée pour une direction à superposition où un angle directeur enregistré par le conducteur, au besoin, peut être superposé par un autre angle, comportant au moins deux roues à denture en contact avec une autre roue à denture,
**caractérisé en ce qu'**au moins une première roue à denture et une seconde roue à denture sont prévues dans le mécanisme de transmission, la roue à denture première et la roue à denture secondaire comportant des caractéristiques physiques différentes.

6. Mécanisme de transmission selon l'une des revendications 1 à 5,
**caractérisé en ce que** la roue à denture secondaire est plus dure que la roue à denture première.

7. Mécanisme de transmission selon l'une des revendications 1 à 6,
**caractérisé en ce que** la roue à denture secondaire est plus stable que la roue à denture première.

8. Mécanisme de transmission selon l'une des revendications 1 à 7,
**caractérisé en ce que** les roues à denture première et secondaire comportent des coefficients d'élasticité (e-modules) différents.

9. Mécanisme de transmission selon l'une des revendications 1 à 8,
**caractérisé en ce qu'**une matière métallique et une matière synthétique sont utilisée comme matières différentes.

10. Mécanisme de transmission selon l'une des revendications 1 à 9,
**caractérisé en ce que** la roue à denture première est radialement décalée vis-à-vis la roue à denture secondaire par un déplacement de profile positif

11. Mécanisme de transmission selon l'une des revendications 1 à 10,
**caractérisé en ce que** le mécanisme de transmission comporte des engrenages à denture droite.

12. Mécanisme de transmission selon l'une des revendications 1 à 11,
**caractérisé en ce que** la transmission forme des engrenages planétaires.

13. Mécanisme de transmission selon la revendication 12,
**caractérise en ce que** les roues première et secondaire forment des roues planétaires dans les engrenages planétaires.

14. Mécanisme de transmission selon la revendication 13,
**caractérisé en ce que** les roues planétaires première et secondaire comportent une suspension ou des paliers radialement doux.
